(19) Europäisches Patentamt

European Patent Office

Office européen des brevets

(11) **EP 1 017 007 B1**

(12) **EUROPEAN PATENT SPECIFICATION**

(45) Date of publication and mention
of the grant of the patent:
**14.08.2002 Bulletin 2002/33**

(51) Int Cl.$^7$: **G06K 7/14**

(21) Application number: **98830791.4**

(22) Date of filing: **29.12.1998**

(54) **Process for reading an optical code**

Verfahren zum Lesen eines optischen Codes

Procédé de lecture d'un code optique

(84) Designated Contracting States:
**AT BE CH DE DK ES FR GB IT LI NL PT SE**

(43) Date of publication of application:
**05.07.2000 Bulletin 2000/27**

(73) Proprietor: **DATALOGIC S.P.A.**
**40012 Lippo di Calderara di Reno (Bologna) (IT)**

(72) Inventor: **Valenti, Alessandro**
**40026 Imola (IT)**

(74) Representative: **Checcacci, Giorgio**
**PORTA, CHECCACCI & Associati S.p.A.**
**Viale Sabotino, 19/2**
**20135 Milano (IT)**

(56) References cited:
**EP-A- 0 436 072**      **EP-A- 0 661 661**

## Description

The present invention relates to a process for reading an optical code. More specifically the invention relates to a process for scanning and decoding an optical code, intended for being executed in optical readers of low cost and reduced size.

In the following description and in the subsequent claims, the term: "optical code" is used to indicate a code (such as for example a bar code, a two-dimensional code or similar) able to univocally identify the objects on which it is provided. Hereinbelow, merely in order to render the description clearer, reference to bar codes is made, i.e. to such codes consisting of a sequence of light and dark regions, respectively indicated as space and/or bar type elements.

Different processes for scanning and decoding a symbol of a bar code are known. A typical process can be schematically illustrated in the following way: a bar code reading device (reader) illuminates the code to be decoded along a reading line; the light scattered is collected by a photodetector, which in turn generates an analog electric signal proportional to the intensity of the scattered light.

The analog electric signal is digitized by a microprocessor circuit, in such a way to obtain some characteristics that represent it completely, so to define a scan of the examined code. Such scan is then elaborated by an algorithm of bar code decoding that provides, in conclusion, the sequence of characters defining the decoded symbol of the examined bar code.

Typically, the decoding operation of a code requires the acquisition in sequence of a plurality of different scans of the same code; this is due to the possible presence of disturbances or errors during the scanning, caused for example by spots, scorings and blurs present somewhere on the label containing the code to be decoded. In this instance, if the scanning line passes through these points, the decoding process stops, as the decoding of the altered code characters is not possible, thus giving a message of error. All the information obtained by the elaboration of the aforesaid scan, are in this case abandoned, and a new attempt is carried by elaborating a new scan, which is carried out onto a different region of the label, until a complete string of decoded characters is obtained.

In conventional readers, the data of all the scans are each time stored in a memory buffer in order to be subsequently drawn and subjected to the following steps of elaboration and decoding.

Typically, the operation of elaboration and decoding of the scans stored in the memory buffer is slower than that of acquisition and storage, because of the relevant computational load required. This is particularly evident in the so-called low-target readers (readers characterized by low costs and reduced size); they comprise a microprocessor having a limited calculation capacity and which is therefore relatively slow in the elaboration and decoding of the data of the various scans.

Generally, in low-target optical readers, during the attempt of decoding a scan, a plurality of further scans of the code are acquired and stored; such scans are intended to being subsequently elaborated in order to be subjected in turn to an attempt of decoding, when the decoding attempt of the previously elaborated scan should not have been successful.

In particular, the logic of acquisition and drawing of the scans into and from the memory buffer is based upon the use of a memory buffer of the FIFO (first-in, first-out) queuing type and can be schematically illustrated in the following way: the various scans are stored in sequence in respective subsequent portions of the buffer, on which some storage functions (at the end of the buffer) and drawing functions (at the beginning of the buffer) operate in an asynchronous way. When a new scan of the code is acquired, the storage function of the scan at the end of the buffer is called; contemporaneously, a test whether the buffer is full or not is carried out, and if this test gives a positive result, the drawing function of the scan stored at the beginning of the buffer is called, so to allow the storage-at the end of the buffer of the new acquired scan. The storage function inserts in the buffer only the information related to the scans that, on the basis of a control on the number of elements, are compatible with a likely code. Such information are then elaborated by the decoding algorithm that carries out an attempt of decoding of the scan.

A first drawback associated to the above described scanning and decoding process is correlated to the acquisition and storage technique of the scans. According to such technique, all the scans acquired are stored in the memory buffer; this implies often the storage of scans which are similar (or equal) to each other, that take up some space in the memory without containing additional information with respect to those of the scans previously stored.

A second drawback associated to the above described process of scanning and decoding is correlated to the technique of decoding of the scans. According to such technique, the algorithm of decoding is called for all the stored scans in an independent way; this often implies the repetition of the elaboration and decoding operation (which is long and resource consuming) for scans which are similar (or equal) to each other and accordingly an increase of the execution time of the overall decoding process.

EP 0661 661 discloses a method of reading a bar-code, wherein a plurality of scans are made and processed to determine the bar-code. The scans are stored in a storage device and tested in a testing unit for a consensus of at least two scans before data to be sent to a decoder. The testing for consensus starts when two scans have been made. A consensus is reached, for example, when more than half the scans are in agreement with the each other. If there is no consensus, then a third scan is made and so on until a consensus is reached.

If no consensus is reached when the full number of scans has been made, the bar-code is declared unreadable. When the consensus is reached, then the barcode is taken as having been successfully read and the process terminates.

The technical problem at the basis of the present invention is that of allowing a fast and reliable reading of the optical codes even in readers with reduced computational resources, such as for example the low-target optical readers.

Therefore, in a first aspect thereof, the present invention relates to a process for reading an optical code comprising the steps of acquiring a plurality of subsequent scans of an optical code, such scans comprising a plurality of data identifying the code; and verifying each time if the scan just acquired is similar to the scans previously acquired and stored in a memory buffer comprising a plurality of memory cells; characterised in that:

-   a1) if the similitude test gives a positive result, abandoning the scan just acquired;
-   a2) if the similitude test gives a negative result, storing the scan just acquired in a free cell of the memory buffer.

Advantageously, the process according to the invention thus foresees a pre-elaboration of the acquired scan (executed by the acquisition software) in order to avoid the storage of scans similar or equal to each other. This allows to obtain a better exploitation of the memory, proceeding with the storage of the only "useful" scans, i.e. those scans provided with an additional content of information with respect to that of the scans previously stored.

Advantageously, the pre-elaboration of the acquired scans consists in a similitude comparison of the scans (easy and fast operation, from a computational point of view) and foresees the use of a memory buffer organized according to a cell structure, that is provided with a plurality of memory free cells designed for being subsequently occupied by the "useful" scans as they are acquired.

The process according to the invention is particularly advantageous when carried out in readers having poor calculation resources, such as for example low-target readers, wherein the operation of elaboration and decoding of the scans is extremely slow. In such readers, the execution of a pre-elaboration step intended to eliminate the similar scans, allows the elaboration and decoding in real time of the various scans, as they are acquired, thus increasing the execution velocity of the whole decoding process.

Preferred embodiments of this aspect of the invention are set out in the enclosed claims 2-8.

Preferably, after having carried out the test of similitude, the process proceeds iteratively with the acquisition of a new scan, each time repeating the aforesaid similitude test until all the code scans are analyzed.

Preferably, the process according to the present invention comprises the step b) of carrying out each time an attempt of decoding the scans acquired and stored in the memory buffer and:

    b1) if said attempt gives a positive result, reporting the decoded code;
    b2) if said attempt gives a negative result, iteratively repeating the decoding attempt for the subsequent scans stored.

This allows to increase the reliability and the speed of the whole decoding process, limiting the calling of the decoding operation (operation which is time and resources consuming from the computational point of view) only for the "useful" scans and leaving the sorting and the elimination of similar scans to the pre-elaboration step.

According to a first embodiment of the process according to the present invention, if the similitude test gives a positive result, a counter associated with the scan previously acquired and stored in the memory buffer is increased, and the just acquired scan is abandoned.

Counting the similitude events is advantageously faster than a repeated calling of the decoding operation and requires limited computational resources.

Advantageously, the similitude test step a) between the scans acquired is carried out in real time and requires limited computational resources.

Preferably, in the specific instance of a bar code, the similitude test step comprises the step of simply verifying if the number of bar, or space, or total elements of the scan just acquired is equal to the number of bar or space or total elements of any of the previously acquired and stored scans. If such test gives a positive result, the step above indicated with a1) is carried out, otherwise, the step above indicated with a2) is carried out. Such system is extremely simple and fast.

Alternatively, if such test on the number of bar, or space, or total elements gives a positive result, the following steps are carried out:

-   i) calculating an error variable, which is a function of the difference between the data having the same location in the scan just acquired and in the scan previously acquired and stored;
-   ii) verifying if the error variable is greater than a predetermined threshold and:

    -   if the verification test of step ii) gives a positive result, carrying out the step above indicated with a1);
    -   if the verification test of step ii) gives a negative result, carrying out the step above indicated with a2).

In particular, the error variable is equal to the sum of the absolute values of the differences of all the elements having the same location in the scan just acquired and in the scan previously acquired.

Such system is slower than that previously described but more reliable.

According to a further alternative embodiment of the process of the present invention, the calculation of the error variable comprises the calculation of a correlation coefficient according to conventional algorithms. Such system is the slowest among those described but also the most reliable.

In a second aspect thereof, the present invention relates to a process for reading an optical code, comprising the steps of acquiring a plurality of subsequent scans of an optical code, such scans comprising a plurality of data identifying the code; and verifying each time if the scan just acquired is similar to the scans previously acquired and stored in a memory buffer comprising a plurality of memory cells; characterised in that:

- a1) if the similitude test gives a positive result, the following steps are carried out:

    - a11b) defining an average scan between the scan just acquired and the similar scan previously acquired and stored in the memory buffer;
    - a12b) storing such average scan in the memory buffer and abandoning the similar scan previously acquired; and in that;

- a2) if the similitude test gives a negative result, storing the scan just acquired in a free cell of the memory buffer.

Thus, according to such embodiment, an oversampling and an operation of averaging on the data of the various acquired scans is carried out; this allows, advantageously, to decrease the statistical influence of the stochastic disturbances on the scans, thus increasing the reliability of the whole decoding process.

Preferred embodiments of this aspect of the invention are set out in the enclosed claims 10-18.

According to a particularly advantageous embodiment of the process according to the present invention, if the similitude test gives a positive result, the following steps are carried out:

- a11c) increasing a counter associated with the similar scan previously acquired and stored in the memory buffer;
- a12c) verifying whether the value of the counter is greater than a predetermined threshold, and:

    - a12c1) if the latter verification test gives a positive result, acquiring a new scan;
    - a12c2) if the latter verification test gives a negative result, carrying out steps a11b) and a12b).

According to such embodiment, the calculation of the average scan is advantageously carried out only until a predetermined number of repeated similitude events is achieved; if not, such events are just counted. This allows to limit the computational resources needed for sampling the scans.

Preferably, the step a11b) relative to the definition of an average scan comprises the step of calculating a mean between the data of the scan just acquired and the data of the similar scan previously acquired and stored. In particular, the step a11b) comprises the step of adding up one by one the data having the same location in the scan just acquired and in the similar scan previously acquired and stored. This allows to calculate a mean of the data acquired by means of a simple operation of summing them, eliminating the need of a division each time by the number of averaged scans and, therefore, decreasing the process computational load. This is possible because the decoding algorithms are independent from the scale factor of the scan.

Advantageously, the similitude test step a) between the scans acquired is carried out in real time and requires limited computational resources.

Preferably, in the specific instance of a bar code, the similitude test step comprises the step of simply verifying if the number of bar, or space, or total elements of the scan just acquired is equal to the number of bar or space or total elements of any of the previously acquired and stored scans. If such test gives a positive result, the step above indicated with a1) is carried out, otherwise, the step above indicated with a2) is carried out. Such system is extremely simple and fast.

Alternatively, if such test on the number of bar, or space, or total elements gives a positive result, the following steps are carried out:

- i) calculating an error variable, which is a function of the difference between the data having the same location in the scan just acquired and in the scan previously acquired and stored;
- ii) verifying if the error variable is greater than a predetermined threshold and:

    - if the verification test of step ii) gives a positive result, carrying out the step above indicated with a1) ;
    - if the verification test of step ii) gives a negative result, carrying out the step above indicated with a2).

In particular, the error variable is equal to the sum of the absolute values of the differences of all the elements having the same location in the scan just acquired and in the scan previously acquired.

Such system is slower than that previously described but more reliable.

According to a further alternative embodiment of the process of the present invention, the calculation of the error variable comprises the calculation of a correlation coefficient according to conventional algorithms. Such system is the slowest among those described but also the most reliable.

Further features and advantages of the present invention will appear more clearly from the following detailed description of a preferred embodiment, made with reference to the attached drawings. In such drawings:

- Figure 1 shows a flowchart relative to a first embodiment of the reading process of the present invention;
- Figure 2 shows a flowchart relative to a second embodiment of the process according to the present invention;
- Figure 3 shows a flowchart relative to a third embodiment of the process according to the present invention.

The reading process according to the present invention is suitable for permitting a fast and reliable reading of optical codes, for example bar codes, also in readers having limited computational resources, such as for example low-target readers. This is possible by carrying out (by means of the acquisition software) a step of pre-elaboration of the scans acquired (indicated also with the term "sequences" in the drawings) adapted for eliminating the scans which are similar and for storing only those scans having informative contents different with respect to each other ("useful" scans) so to reduce the computational resources required for carrying out the subsequent steps of elaboration and decoding of the scans and execution time of the whole decoding process.

The process according to the invention foresees the use of a memory buffer organized in a cell structure, i.e. provided with a plurality of free memory cells, designed for being then occupied by the "useful" scans as they are acquired.

The pre-elaboration step of the scans can interact with the decoding step of the acquired scans, which is *in se* known and thus will not be described hereinbelow in detail, or can be completely independent from this last.

The process of the invention foresees the subsequent acquisition of a plurality of scans of the examined code. In particular, it foresees that, when a new scan is acquired, this is compared, before being stored in the memory buffer, with the scan or scans previously stored to verify if the examined scan is similar to at least one of the stored scans.

If such test gives a positive result, the just acquired scan is abandoned and further scans are iteratively acquired, each time repeating the aforesaid similitude test step.

If one of the aforesaid tests gives a negative result, the scan just acquired is stored in a free cell of the memory buffer and, also in this case, further scans are iteratively acquired, each time repeating the above described similitude test step.

Preferably, the process according to the invention, foresees also the execution of an attempt of decoding the scans stored. In particular, first of all the acquisition and storage of a first scan is carried out, after which a decoding attempt on the basis of such scan is performed. If the attempt gives a positive result, the decoded code is reported, otherwise an attempt of decoding the subsequent stored scan is iteratively carried out. Advantageously, the decoding attempts are carried out exclusively on the stored scans ("useful" scans), which are in limited and reduced number (thanks to the previous pre-elaboration) with respect to the acquired scans.

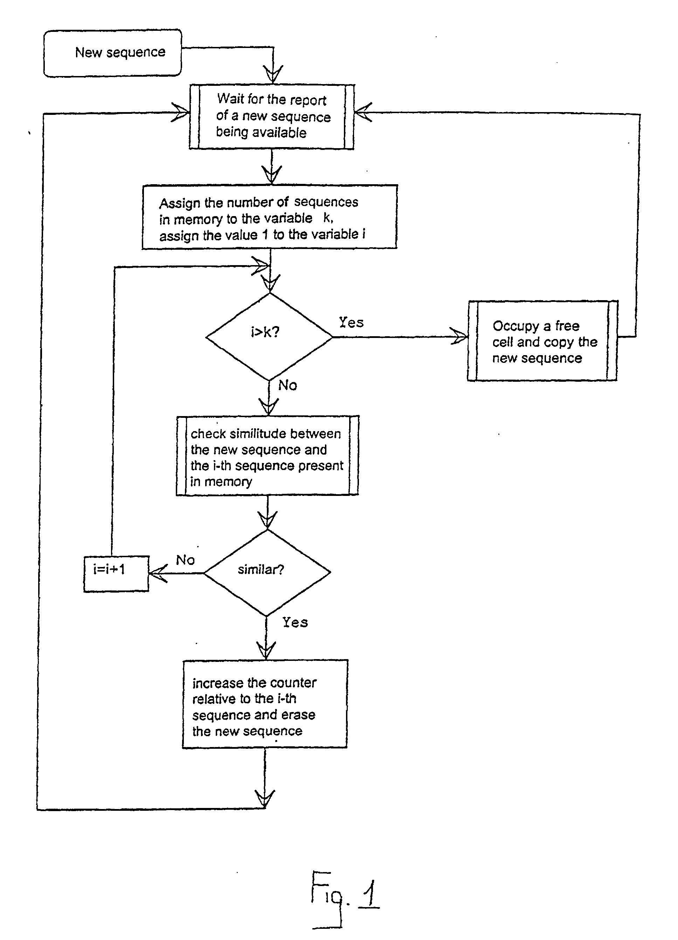

Figures 1-3 show three examples of alternative embodiments of the above described reading process. In such figures, "k" is a variable correlated to the number of the scans present in the memory buffer and "i" is a counter which is updated each time a similitude event occurs between the scan just acquired and the scan previously acquired and stored.

According to an embodiment illustrated in figure 1, the process foresees that, each time a new scan is acquired (and such scan is available for being elaborated), k is updated with the number of scans present in the memory, and it is verified whether i > k; if such test gives a positive result, it means that all the scans present in the memory have been examined and a new scan is acquired. Conversely, if i < k, the similitude test step is carried out between the new scan and the i-th scan present in the memory.

If such test gives a positive result, before abandoning the scan just acquired, a counter associated to the similar scan previously acquired and stored in the memory buffer is increased, and the similitude comparison is repeated for a new scan acquired (in particular, first of all the comparison between i and k is repeated and then, if i < k the similitude comparison is carried out).

If the similitude test gives a negative result, the value of the variable i is increased by one, and the comparison between i and k is repeated.

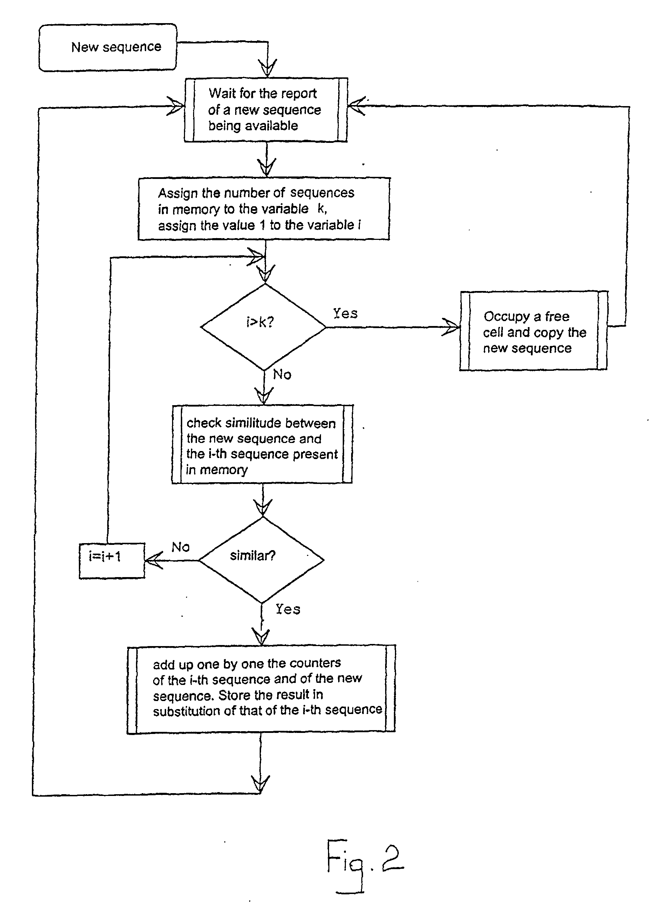

According to an embodiment of the process according to the present invention shown in figure 2, if one of the similitude tests gives a positive result, an average scan is defined between the scan just acquired and the similar scan previously acquired and stored in the memory buffer. Such average scan is stored in the memory buffer in substitution of the similar scan previously acquired and stored, and the similitude comparison is repeated for a new scan acquired.

The average scan is defined carrying out an operation of averaging between the data associated to the scan just acquired and those associated to the similar scan previously acquired and stored in the memory buffer. In particular, the data having the same location in the scan just acquired and in the similar scan previously acquired and stored are respectively added up one by one.

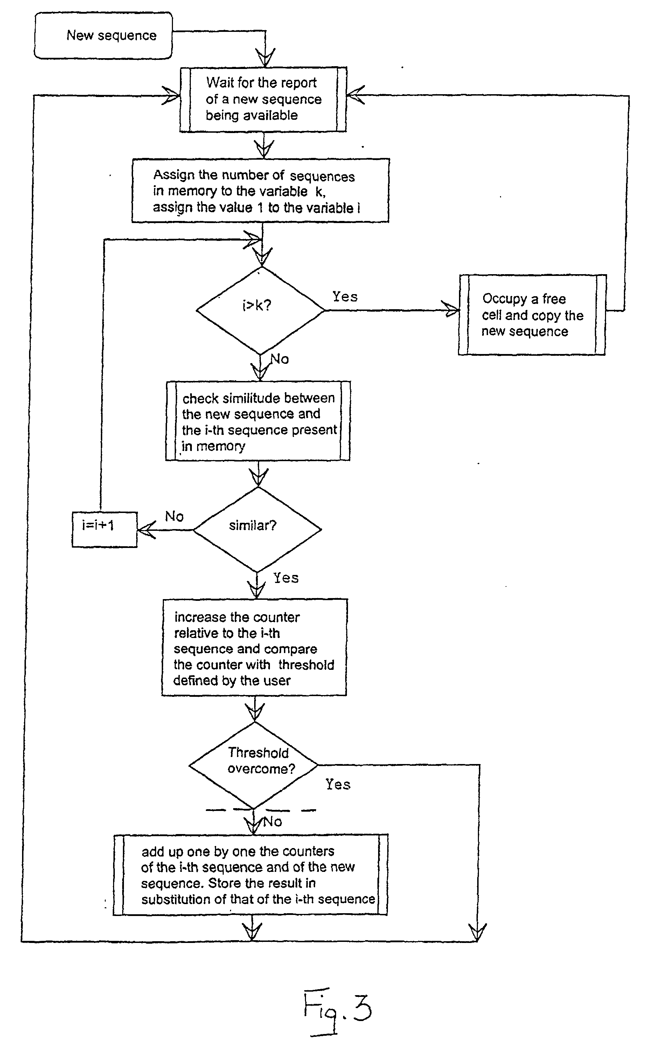

According to the embodiment of the process illustrated in figure 3, if the similitude test gives a positive result, a counter associated to the similar scan previously acquired and stored in the memory buffer is increased, and it is verified whether the value of the counter is greater than a predetermined threshold. If this test gives a positive result, a new scan is acquired and the similitude comparison is repeated for the new scan acquired. If the test on the threshold value gives a negative result, an average scan is defined, as above described, which is stored in the memory buffer in substitution of the similar scan previously acquired and the similitude comparison is repeated for a new scan acquired.

The decision whether the new scan is similar to a scan previously stored or not is carried out by means of very simple, fast and reliable methods.

For example, in the specific case of a bar code, the similitude test can simply consist in verifying if the number of bar or space or total elements of the scan just acquired is equal to the number of bar or space or total elements of one of the scans previously stored.

Alternatively, whenever the aforesaid test on the number of elements gives a positive result, a error variable can be calculated as a function of the difference between the data respectively having the same location in the scan just acquired and in the scan previously acquired and, in particular, equal to the sum of the absolute values of the differences of all elements having the same location in the scan just acquired and in the previously acquired scan.

An example of calculation algorithm is the following one:

if count(Si) = count(Sn)
then
    create a error variable
    set error = 0
    for j = 1 to count (Si)
        increase error by the absolute value of $(Si[j]/Cnt\_i)-Sn[j]$
    if error < predetermined threshold
        then the sequences are considered SIMILAR
    otherwise the sequences are considered NOT SIMILAR otherwise the sequences are considered NOT SIMILAR
wherein
Si is the i-th stored scan, which the new scan is compared with,
Sn is the new scan;
Si[j] is the j-th element of the scan Si;
Sn[j] is the j-th element of the scan Sn;
count(Sn) is the number of elements contained in the scan Sn;
Cnt_i is the number of scans that have been added up in order to obtain Si.

Alternatively, also an algorithm of calculation of a correlation coefficient may be used in the calculation of the error variable.

Such algorithm is, for example, the following one:

if count (Si) = count (Sn)
then
    create a sequence Gi and a sequence Gn
    create a average_i variable and a norma_i variable
    create a average_n variable and a norma_n variable
    create a error variable
    set average_i=0 and norma_i=0
    set average_n=0 and norma_n=0
    for j=1 to count (Si)
        increase average_i by the value Si[j]
        increase average_n by the value Sn[j]
    for j= 1 to count (Si)
        set Gi[j] = Si[j] - average_i
        set Gn[j] = Sn[j] - average_n
        for j= 1 to count (Si)
        increase norma_i by the value $(Gi[j])^2$
        increase norma_n by the value $(Gn[j])^2$
    for j = 1 to count (Si)
        set Gi[j] =Gi[j] / $\sqrt{norma\_i}$
        set Gn[j] = Gn[j] / $\sqrt{norma\_n}$
    set error = 1
    for j = 1 to count(Gi)
        decrease error by the multiplication of Gi[j] by Gn[j]
    if error< predetermined threshold
        then the sequences are considered SIMILAR
    otherwise the sequences are considered NOT SIMILAR otherwise the sequences are considered NOT SIMILAR
wherein Gi and Gn are normalized scans.

The above disclosed algorithm is only the theoretical one; actually different ways for calculating the correlation coefficient exist, which optimize the execution time thereof.

**Claims**

1. Process for reading an optical code, comprising the steps of acquiring a plurality of subsequent scans of an optical code, such scans comprising a plurality of data identifying the code; and verifying each time if the scan just acquired is similar to the scans previously acquired and stored in a memory buffer comprising a plurality of memory cells; **characterised in that**:

   - a1) if the similitude test gives a positive result, abandoning the scan just acquired;
   - a2) if the similitude test gives a negative result, storing the scan. just acquired in a free cell of the memory buffer.

**2.** Process according to Claim 1, further comprising the step b) of carrying out each time a decoding attempt of the scans acquired and stored in the memory buffer and:

b1) if said attempt gives a positive result, reporting the decoded code;
b2) if said attempt gives a negative result, iteratively repeating the decoding attempt for the subsequent scans stored.

**3.** Process according to Claim 1, wherein, after having carried out the similitude test, a new scan is iteratively acquired, each time repeating the aforesaid similitude test, until all the scans of the code are analyzed.

**4.** Process according to Claim 1, wherein, if the similitude test gives a positive result, the following step is carried out:

- a11a) increasing a counter associated with the similar scan previously acquired and stored in the memory buffer.

**5.** Process according to claim 1, wherein the optical code is a bar code comprising a plurality of bar and space elements, and the similitude test step comprises the step of verifying if the number of bar, or space, or total elements of the scan just acquired is equal to the number of bar or space or total elements of any of the previously acquired scans and if such test gives a positive result, carrying out the step a1), otherwise, the step a2).

**6.** Process according to claim 5, wherein if the test on the number of bar, or space, or total elements gives a positive result, the following steps are carried out:

- i) calculating an error variable, which is a function of the difference between the data having the same location in the scan just acquired and in the scan previously acquired;
- ii) verifying if the error variable is greater than a predetermined threshold and:
    - if the verification test of step ii) gives a positive result, carrying out step a1);
    - if the verification test step ii) gives a negative result, carrying out step a2).

**7.** Process according to Claim 6, wherein the error variable is equal to the sum of the absolute values of the differences of all elements having the same location in the scan just acquired and in the scan previously acquired.

**8.** Process according to Claim 6, wherein the calculation of the error variable comprises the calculation of a correlation coefficient.

**9.** Process for reading an optical code, comprising the steps of acquiring a plurality of subsequent scans of an optical code, such scans comprising a plurality of data identifying the code; and verifying each time if the scan just acquired is similar to the scans previously acquired and stored in a memory buffer comprising a plurality of memory cells; **characterised in that**:

- a1) if the similitude test gives a positive result, the following steps are carried out:
    - a11b) defining an average scan between the scan just acquired and the similar scan previously acquired and stored in the memory buffer;
    - a12b) storing such average scan in the memory buffer and abandoning the similar scan previously acquired; and **in that**;
- a2) if the similitude test gives a negative result, storing the scan just acquired in a free cell of the memory buffer.

**10.** Process according to Claim 9, further comprising the step b) of carrying out each time a decoding attempt of the scans acquired and stored in the memory buffer and:

b1) if said attempt gives a positive result, reporting the decoded code;
b2) if said attempt gives a negative result, iteratively repeating the decoding attempt for the subsequent scans stored.

**11.** Process according to Claim 9, wherein, after having carried out the similitude test, a new scan is iteratively acquired, each time repeating the aforesaid similitude test, until all the scans of the code are analyzed.

**12.** Process according to claim 9, wherein, if the similitude test gives a positive result, the following steps are carried out:

- a11c) increasing a counter associated with the similar scan previously acquired and stored in the memory buffer;
- a12c) verifying if the value of the counter is greater than a predetermined threshold, and:
    - a12c1) if the latter verification test gives a positive result, acquiring a new scan;
    - a12c2) if the latter verification test gives a negative result, carrying out steps a11b)

and a12b).

13. Process according to Claim 9 or 12, wherein the step a11b) relative to the definition of an average scan, comprises the step of calculating a mean between the data of the scan just acquired and the data of the similar scan previously acquired.

14. Process according to Claims 9 or 12, wherein the step a11b) relative to the definition of an average scan, comprises the steps of adding up one by one the data having the same location in the scan just acquired and in the similar scan previously acquired.

15. Process according to claim 9, wherein the optical code is a bar code comprising a plurality of bar and space elements, and the similitude test step comprises the step of verifying if the number of bar, or space, or total elements of the scan just acquired is equal to the number of bar or space or total elements of any of the previously acquired scans and if such test gives a positive result, carrying out the step a1), otherwise, the step a2).

16. Process according to claim 15, wherein if the test on the number of bar, or space, or total elements gives a positive result, the following steps are carried out:

-   i) calculating an error variable, which is a function of the difference between the data having the same location in the scan just acquired and in the scan previously acquired;
-   ii) verifying if the error variable is greater than a predetermined threshold and:

    -   if the verification test of step ii) gives a positive result, carrying out step a1);
    -   if the verification test of test ii) gives a negative result, carrying out step a2).

17. Process according to Claim 16, wherein the error variable is equal to the sum of the absolute values of the differences of all elements having the same location in the scan just acquired and in the scan previously acquired.

18. Process according to Claim 16, wherein the calculation of the error variable comprises the calculation of a correlation coefficient.

**Patentansprüche**

1. Verfahren zum Lesen eines optischen Codes mit folgenden Verfahrensschritten: Erheben mehrerer aufeinanderfolgender Abtastungen eines optischen Codes, wobei solche Abtastungen eine Vielzahl von Daten umfassen, die den Code identifizieren; und Überprüfen jeweils jedes mal, ob die gerade erhobene Abtastung den zuvor erhobenen und in einem Speicherpuffer, welcher mehrere Speicherzellen umfaßt, gespeicherten Abtastungen ähnlich ist; **dadurch gekennzeichnet, daß** dann,

    a1) wenn die Ähnlichkeitsüberprüfung ein positives Ergebnis ergibt, die gerade erhobene Abtastung verworfen wird;
    a2) wenn die Ähnlichkeitsüberprüfung ein negatives Ergebnis ergibt, die gerade erhobene Abtastung in einer freien Zelle des Speicherpuffers gespeichert wird.

2. Verfahren nach Anspruch 1, mit dem weiteren Verfahrensschritt b), bei dem jedes mal ein Decodierversuch der erhobenen und in dem Speicherpuffer gespeicherten Abtastungen durchgeführt wird, und dann,

    b1) wenn der Versuch ein positives Ergebnis ergibt, der decodierte Code berichtet wird;
    b2) wenn der Versuch ein negatives Ergebnis ergibt, der Decodierversuch für die nachfolgenden gespeicherten Abtastungen iterativ wiederholt wird.

3. Verfahren nach Anspruch 1, bei dem nach der Ausführung der Ähnlichkeitsprüfung eine neue Abtastung iterativ erhoben wird, wobei jedes mal die zuvor genannte Ähnlichkeitsprüfung wiederholt wird, bis alle Abtastungen des Codes analysiert sind.

4. Verfahren nach Anspruch 1, wobei dann, wenn die Ähnlichkeitsprüfung ein positives Ergebnis ergibt, der folgende Schritt ausgeführt wird:

    a11a) Erhöhen eines Zählers, der zu der ähnlichen Abtastung gehört, die zuvor erhoben und in dem Speicherpuffer gespeichert wurde.

5. Verfahren nach Anspruch 1, wobei der optische Code ein Strichcode mit mehreren Strich- und Zwischenraumelementen ist und die Ähnlichkeitsprüfung den Schritt der Überprüfung, ob die Anzahl der Striche oder Zwischenräume oder aller Elemente der gerade erhobenen Abtastung gleich der Anzahl der Striche oder Zwischenräume oder aller Elemente einer der zuvor erhobenen Abtastungen ist, umfaßt, und wenn diese Prüfung ein positives Ergebnis ergibt, Ausführen des Schrittes a1), anderenfalls des Schrittes a2).

6. Verfahren nach Anspruch 5, wobei dann, wenn die Prüfung der Anzahl der Striche oder Zwischenräume oder aller Elemente ein positives Ergebnis ergibt, die folgenden Schritte ausgeführt werden:

i) Berechnen einer Fehlervariablen, die eine Funktion der Differenz zwischen den Daten mit derselben Position in der gerade erhobenen Abtastung und in der zuvor erhobenen Abtastung ist;

ii) Überprüfen, ob die Fehlervariable größer ist als ein vorgegebener Schwellwert, und

- wenn die Prüfung des Schrittes ii) ein positives Ergebnis ergibt, Ausführen des Schrittes a1);
- wenn die Prüfung des Schrittes ii) ein negatives Ergebnis ergibt, Ausführen des Schrittes a2).

7. Verfahren nach Anspruch 6, wobei die Fehlervariable gleich der Summe der Absolutwerte der Differenzen aller Elemente mit derselben Position in der gerade erhobenen Abtastung und in der zuvor erhobenen Abtastung ist.

8. Verfahren nach Anspruch 6, wobei die Berechnung der Fehlervariablen die Berechnung eines Korrelationskoeffizienten umfaßt.

9. Verfahren zum Lesen eines optischen Codes mit folgenden Verfahrensschritten: Erheben mehrerer aufeinanderfolgender Abtastungen eines optischen Codes, wobei diese Abtastungen einer Vielzahl von Daten umfassen, die den Code identifizieren; und Überprüfen jeweils jedes mal, ob die gerade erhobene Abtastung den zuvor erhobenen und in einem Speicherpuffer, der mehrere Speicherzellen umfaßt, gespeicherten Abtastungen ähnlich ist; **dadurch gekennzeichnet, daß** dann,

a1) wenn die Ähnlichkeitsprüfung ein positives Ergebnis ergibt, die folgenden Schritte ausgeführt werden:

a11b) Definieren einer mittleren Abtastung zwischen der gerade erhobenen Abtastung und der zuvor erhobenen und in dem Speicherpuffer gespeicherten ähnlichen Abtastung;
a12b) Speichern dieser mittleren Abtastung in dem Speicherpuffer und Verwerfen der zuvor erhobenen ähnlichen Abtastung; und daß dann,

a2) wenn die Ähnlichkeitsprüfung ein negatives Ergebnis ergibt, die gerade erhobene Abtastung in einer freien Zelle des Speicherpuffers gespeichert wird.

10. Verfahren nach Anspruch 9, mit dem weiteren Verfahrensschritt b), bei dem jedes mal ein Decodierversuch der erfaßten und in dem Speicherpuffer gespeicherten Abtastungen durchgeführt wird, und dann,

b1) wenn der Versuch ein positives Ergebnis ergibt, der decodierte Code berichtet wird;
b2) wenn der Versuch ein negatives Ergebnis ergibt, der Decodierversuch für die nachfolgenden gespeicherten Abtastungen iterativ wiederholt wird.

11. Verfahren nach Anspruch 9, bei dem nach dem Ausführen der Ähnlichkeitsprüfung eine neue Abtastung iterativ erhoben wird, wobei die oben genannte Ähnlichkeitsprüfung jedes mal wiederholt wird, bis alle Abtastungen des Codes analysiert sind.

12. Verfahren nach Anspruch 9, wobei dann, wenn die Ähnlichkeitsprüfung ein positives Ergebnis ergibt, die folgenden Schritte ausgeführt werden:

a11c) Erhöhen eines Zählers, der zu der zuvor erhobenen und in dem Speicherpuffer gespeicherten ähnlichen Abtastungen gehört;
a12c) Überprüfen, ob der Wert des Zählers größer ist als ein vorgegebener Schwellwert ist, und dann

a12c1) wenn die zuletzt genannte Überprüfung ein positives Ergebnis ergibt, Erheben einer neuen Abtastung;
a12c2) wenn die zuletzt genannte Überprüfung ein negatives Ergebnis ergibt, Ausführen der Schritte a11b) und al2b).

13. Verfahren nach Anspruch 9 oder 12, wobei der Schritt a11b) in bezug auf die Definition einer mittleren Abtastung den Schritt der Berechnung eines Mittelwertes zwischen den Daten der gerade erhobenen Abtastungen und den Daten der zuvor erhobenen ähnlichen Abtastung umfaßt.

14. Verfahren nach Anspruch 9 oder 12, wobei der Schritt a11b) in bezug auf die Definition einer mittleren Abtastung den Schritt des einzelnen Addierens der Daten mit derselben Position in der gerade erhobenen Abtastung und in der ähnlichen, zuvor erhobenen Abtastung umfaßt.

15. Verfahren nach Anspruch 9, wobei der optische Code ein Strichcode mit mehreren Strich- und Zwischenraumelementen ist und der Schritt der Ähnlichkeitsprüfung den Schritt der Überprüfung, ob die Anzahl der Striche oder Zwischenräume oder aller Elemente der gerade erhobenen Abtastung gleich der Anzahl der Striche oder Zwischenräume oder aller Elemente einer der zuvor erhobenen Abtastungen ist, umfaßt und wenn diese Prüfung ein positives Ergebnis ergibt, der Schritt a1) ausgeführt wird, anderenfalls der Schritt a2).

16. Verfahren nach Anspruch 15, wobei dann, wenn die Prüfung der Anzahl der Striche oder Zwischenräume oder aller Elemente ein positives Ergebnis ergibt, die folgenden Schritte ausgeführt werden:

     i) Berechnen einer Fehlervariablen, die eine Funktion der Differenz zwischen den Daten mit derselben Position in der gerade erhobenen Abtastung und in der zuvor erhobenen Abtastung ist;

     ii) Überprüfen, ob die Fehlervariable größer ist als ein vorgegebener Schwellwert, und

-      wenn die Prüfung des Schrittes ii) ein positives Ergebnis ergibt, Ausführen des Schrittes a1);
-      wenn die Prüfung des Schrittes ii) ein negatives Ergebnis ergibt, Ausführen des Schrittes a2).

17. Verfahren nach Anspruch 16, wobei die Fehlervariable gleich der Summe der Absolutwerte der Differenzen aller Elemente mit derselben Position in der gerade erhobenen Abtastung und in der zuvor erhobenen Abtastung ist

18. Verfahren nach Anspruch 16, wobei die Berechnung der Fehlervariablen die Berechnung eines Korrelationskoeffizienten umfaßt.

**Revendications**

1. Procédé pour lire un code optique comprenant les étapes consistant à acquérir plusieurs balayages successifs d'un code optique, ces balayages comprenant plusieurs données identifiant le code ; et vérifier chaque fois si le balayage qui vient d'être acquis est semblable aux balayages précédemment acquis et enregistrés dans une mémoire-tampon contenant plusieurs compartiments-mémoire ; **caractérisé en ce que** :

-      a1) si le test de similitude donne un résultat positif, on abandonne le balayage qui vient d'être acquis ;
-      a2) si le test de similitude donne un résultat négatif, enregistrer le balayage qui vient d'être acquis dans un compartiment libre de la mémoire-tampon.

2. Procédé selon la revendication 1, comprenant en outre l'étape b) consistant à effectuer chaque fois une tentative de décodage des balayages acquis et enregistrés dans la mémoire tampon et :

-      b1) si cette tentative donne un résultat positif, communiquer le code décodé ;
-      b2) si cette tentative donne un résultat négatif, répéter itérativement la tentative de décodage pour les balayages suivants enregistrés.

3. Procédé selon la revendication 1, dans lequel après avoir effectué le test de similitude, on acquiert itérativement un nouveau balayage, en répétant chaque fois le test de similitude précité, jusqu'à ce que tous les balayages du code soient analysés.

4. Procédé selon la revendication 1, dans lequel, si le test de similitude donne un résultat positif, on effectue l'étape suivante :

-      a11a) on incrémente un compteur associé au balayage semblable précédemment acquis et enregistré dans la mémoire-tampon.

5. Procédé selon la revendication 1, dans lequel le code optique est un code à barres comprenant plusieurs éléments barre et espace, et l'étape de test de similitude comprend l'étape consistant à vérifier si le nombre d'éléments barre ou espace ou total du balayage qui vient d'être acquis est égal au nombre d'éléments barre ou espace ou total de l'un quelconque des balayages acquis précédemment, et si ce test donne un résultat positif, on effectue l'étape a1), sinon l'étape a2).

6. Procédé selon la revendication 5, dans lequel, si le test sur le nombre d'éléments barre ou espace ou total donne un résultat positif, les étapes suivantes sont effectuées :

     - i) on calcule une variable d'erreur qui est une fonction de la différence entre les données ayant le même positionnement dans le balayage qui vient d'être acquis et dans le balayage précédemment acquis ;

     - ii) vérifier si la variable d'erreur excède un seuil prédéterminé et :

-      si le test de vérification de l'étape ii) donne un résultat positif, effectuer l'étape a1) ;
-      si le test de vérification de l'étape ii) donne un résultat négatif, effectuer l'étape a2).

7. Procédé selon la revendication 6, dans lequel la variable d'erreur est égale à la somme des valeurs absolues des différences de tous les éléments ayant la même position dans le balayage qui vient d'être acquis et dans le balayage précédemment acquis.

8. Procédé selon la revendication 6, dans lequel le calcul de la variable d'erreur comprend le calcul d'un coefficient de corrélation.

9. Procédé pour lire un code optique, comprenant les étapes consistant à acquérir plusieurs balayages successifs d'un code optique, ces balayages comprenant plusieurs données identifiant le code ; et vérifier chaque fois si le balayage qui vient d'être acquis est semblable aux balayages précédemment acquis et enregistrés dans une mémoire-tampon contenant plusieurs compartiments-mémoire ; **caractérisé en ce que** :

- a1) si le test de similitude donne un résultat positif, les étapes suivantes sont effectuées :

  - a11b) définir un balayage moyen entre le balayage qui vient d'être acquis et le balayage semblable acquis précédemment et enregistré dans la mémoire-tampon ;
  - a12b) enregistrer ce balayage moyen dans la mémoire-tampon et abandonner le balayage semblable précédemment acquis ; et **en ce que**

- a2) si le test de similitude donne un résultat négatif, enregistrer le balayage qui vient d'être acquis dans un compartiment libre de la mémoire-tampon.

10. Procédé selon la revendication 9, comprenant en outre l'étape b) consistant à effectuer chaque fois une tentative de décodage des balayages acquis et enregistrés dans la mémoire-tampon et :

- b1) si cette tentative donne un résultat positif, communiquer le code décodé ;
- b2) si cette tentative donne un résultat négatif, répéter itérativement la tentative de décodage pour les balayages suivants enregistrés.

11. Procédé selon la revendication 9, dans lequel, après avoir effectué le test de similitude, on acquiert itérativement un nouveau balayage en répétant chaque fois le test de similitude précité, jusqu'à ce que tous les balayages du code soient analysés.

12. Procédé selon la revendication 9, dans lequel, si le test de similitude donne un résultat positif, les étapes suivantes sont effectuées :

- a11c) on incrémente un compteur associé au balayage semblable précédemment acquis et enregistré dans la mémoire-tampon ;
- a12c1) vérifier si la valeur du compteur excède un seuil prédéterminé, et :

  - a12c1) si ce dernier test de vérification donne un résultat positif, acquérir un nouveau balayage ;
  - a12c2) si ce dernier test de vérification donne un résultat négatif, effectuer les étapes a11b) et a12b).

13. Procédé selon la revendication 9 ou 12, dans lequel l'étape a11b) relative à la définition d'un balayage moyen comprend l'étape consistant à calculer une moyenne entre les données du balayage qui vient d'être acquis et les données du balayage similaire précédemment acquis.

14. Procédé selon la revendication 9, dans lequel l'étape a11b) relative à la définition d'un balayage moyen comprend les étapes consistant à additionner une par une les données ayant le même positionnement dans le balayage qui vient d'être acquis et dans le balayage similaire précédemment acquis.

15. Procédé selon la revendication 9, dans lequel le code optique est un code à barres comprenant plusieurs éléments barre et espace, et l'étape de test de similitude comprend l'étape consistant à vérifier si le nombre d'éléments barre ou espace ou total du balayage qui vient d'être acquis est égal au nombre d'éléments barre ou espace ou total de l'un quelconque des balayages acquis précédemment, et si ce test donne un résultat positif, on effectue l'étape a1), sinon, l'étape a2).

16. Procédé selon la revendication 15, dans lequel si le test sur le nombre d'éléments barre ou espace ou total donne un résultat positif, les étapes suivantes sont effectuées :

- i) Calculer une variable d'erreur qui est une fonction de la différence entre les données ayant le même positionnement dans le balayage qui vient d'être acquis et dans le balayage précédemment acquis ;
- ii) vérifier si la variable d'erreur excède un seuil prédéterminé et :

  - si le test de vérification de l'étape ii) donne un résultat positif, effectuer l'étape a1) ;
  - si le test de vérification de l'étape ii) donne un résultat négatif, effectuer l'étape a2).

17. Procédé selon la revendication 16, dans lequel la variable d'erreur est égale à la somme des valeurs absolues des différences de tous les éléments ayant la même position dans le balayage qui vient d'être acquis et dans le balayage précédemment acquis.

18. Procédé selon la revendication 16, dans lequel le calcul de la variable d'erreur comprend le calcul d'un coefficient de corrélation.

New sequence

Wait for the report of a new sequence being available

Assign the number of sequences in memory to the variable k, assign the value 1 to the variable i

i>k?

Yes

Occupy a free cell and copy the new sequence

No

check similitude between the new sequence and the i-th sequence present in memory

similar?

No

i=i+1

Yes

increase the counter relative to the i-th sequence and erase the new sequence

Fig. 1

New sequence

Wait for the report
of a new sequence
being available

Assign the number of sequences
in memory to the variable k,
assign the value 1 to the variable i

i>k? — Yes → Occupy a free
cell and copy the
new sequence

No

check similitude between
the new sequence and
the i-th sequence present
in memory

similar? — No → i=i+1

Yes

add up one by one the counters
of the i-th sequence and of the new
sequence. Store the result in
substitution of that of the i-th sequence

Fig. 2

14

New sequence

Wait for the report
of a new sequence
being available

Assign the number of sequences
in memory to the variable k,
assign the value 1 to the variable i

i>k? — Yes → Occupy a free
cell and copy the
new sequence

No

check similitude between
the new sequence and
the i-th sequence present
in memory

i=i+1 ← No — similar?

Yes

increase the counter
relative to the i-th
sequence and compare
the counter with threshold
defined by the user

Threshold
overcome? — Yes

No

add up one by one the counters
of the i-th sequence and of the new
sequence. Store the result in
substitution of that of the i-th sequence

Fig. 3